Europäisches Patentamt

European Patent Office

Office européen des brevets

(11) Numéro de publication: **0 242 312**
**A1**

## DEMANDE DE BREVET EUROPEEN

(21) Numéro de dépôt: **87460005.9**

(22) Date de dépôt: **27.03.87**

(51) Int. Cl.⁴: **G 09 F 13/18**
**B 44 C 3/10**

(30) Priorité: **28.03.86 FR 8604663**

(43) Date de publication de la demande:
**21.10.87 Bulletin 87/43**

(84) Etats contractants désignés:
**AT BE CH DE ES GB GR IT LI LU NL SE**

(71) Demandeur: **ACTUA-VERRE**
**37, rue Ernest Renan**
**F-35000 Rennes (FR)**

(72) Inventeur: **Richer, Charles M. G.**
**37, rue Ernest RENAN**
**F-35000 Rennes (FR)**

(74) Mandataire: **Martin, Jean-Jacques et al**
**Cabinet REGIMBEAU 11, rue Franz Heller**
**F-35700 Rennes (FR)**

(54) **Dispositif de visualisation d'un dessin ou d'une forme, comprenant un empilage de lames en verre ou en matériau similaire.**

(57) Dispositif de visualisation d'un dessin ou d'une forme.

Ce dispositif comprend un empilage de lames en verre (10) dont certaines sont constituées de plusieurs parties accolées (100, 101, 102), dont les faces de contact (11) sont des faces planes sensiblement perpendiculaires au plan des lames, ces faces étant positionnées de manière à décrire le contour du dessin (D1) ou de la forme à visualiser ; les faces de contact (11) constituent des plans de réflexion pour les rayons lumineux traversant les lames (10) ; une source d'éclairage artificiel (15) peut avantageusement être associée à ce dispositif.

Applications diverses, notamment pour enseignes et panneaux publicitaires.

FIG-1

## Description

### DISPOSITIF DE VISUALISATION D'UN DESSIN OU D'UNE FORME, COMPRENANT UN EMPILAGE DE LAMES EN VERRE OU EN MATERIAU SIMILAIRE

La présente invention concerne un dispositif de visualisation d'un dessin ou d'une forme, qui comprend un empilage de lames en verre ou en matériau similaire transparent ou translucide.

Par "dessin", on entendu de manière générale toute représentation graphique faite dans deux dimensions : lettres et chiffres, logos, symboles, messages et/ou dessins proprement dits ; par "forme" on entend une représentation analogue mais spatiale, c'est-à-dire en trois dimensions.

On a déjà proposé antérieurement des dispositifs de visualisation de dessins, en particulier pour des enseignes et des panneaux publicitaires, dans lesquels les motifs à visualiser sont appliqués sur un support transparent ou translucide, ces motifs étant éclairés par une source lumineuse artificielle (par exemple un tube néon) dont les rayons pénètrent à travers l'un des chants du support.

De tels dispositifs, qui sont décrits notamment dans les documents FR-A-2 417 819 et FR-A-2 544 528, présentent certains inconvénients.

En premier lieu, la visualisation réalisée est d'un effet relativement banal et n'attire pas vraiment l'attention par rapport à une enseigne traditionnelle à éclairage direct.

En second lieu, en l'absence de source lumineuse artificielle - notamment durant la journée, lorsque cette source est éteinte - tout effet de lumière disparaît pratiquement et l'enseigne devient terne.

Enfin, en troisième lieu, le dessin est mis en valeur toujours de la même manière, sa visualisation ne dépendant pas, ou du moins dépendant très peu, d'une part de la position de la source lumineuse et de l'éclairage ambiant, d'autre part de la position de l'observateur par rapport au panneau.

L'invention vise à pallier ces inconvénients en proposant un dispositif du type mentionné, qui réalise une mise en valeur d'un genre nouveau et spectaculaire du dessin ou de la forme qui doit être visualisée, cette mise en valeur pouvant être effective et efficace lorsque le dispositif est exposé à la lumière ambiante, même en l'absence d'une source lumineuse artificielle spécialement prévue à proximité du dispositif.

Un autre objectif de l'invention est de proposer un dispositif dans lequel le dessin ou la forme visualisée varie automatiquement d'une part en fonction du déplacement de la source - ou des sources - lumineuses tant naturelles qu'artificielles, qui agissent sur le dispositif, d'autre part en fonction du déplacement de l'observateur ; le dessin ou la forme présentera ainsi un aspect changeant pour un observateur qui se déplace.

On comprendra aisément que ces différentes caractéristiques sont de nature à rehausser très sensiblement le caractère attractif du dessin ou de la forme représentée, ce qui augmente naturellement l'intérêt commercial du dispositif.

Ces résultats sont atteints, conformément à l'invention, par le fait que le dispositif de visualisation comprend un empilage de lames en verre ou en matériau similaire transparent ou translucide destiné à être exposé à une source lumineuse, et que certaines de ces lames sont constituées de plusieurs parties accolées dont les faces de contact sont positionnées de manière à décrire le contour du dessin ou de la forme à visualiser, ces faces de contact constituant des plans de réflexion pour les rayons lumineux traversant lesdites lames. Ces faces de contact sont avantageusement planes. Elles peuvent être disposées soit perpendiculairement au plan des lames, soit obliquement par rapport à ce plan.

Grâce à cet arrangement, le dessin ou la forme visualisée présente un contour lumineux composé de faces réfléchissantes situées au coeur même de l'empilage, ce qui lui confère un aspect original hautement attractif.

La manière dont la lumière est réfléchie sur ces faces dépend naturellement de la disposition de la lumière incidente, c'est-à-dire de la position de la (ou des) source(s) lumineuse(s) ; en outre, la manière dont la lumière est perçue par l'observateur dépend naturellement de sa position par rapport à ces faces réfléchissantes.

Dans un mode de réalisation préférentiel de l'invention, les différentes lames composant l'empilage sont fixées les unes aux autres par collage.

Pour mettre encore mieux en valeur le dessin ou la forme, il est possible de donner à certaines parties constutives des lames une coloration et/ou un état de surface différents de ceux des autres parties.

Il est possible également de réaliser certaines parties de lames en matériau opaque, par exemple en métal ou en matière plastique, ces parties rapportées pouvant avoir soit un rôle purement décoratif, soit servir également à la fixation du dispositif sur un support.

Dans certains modes de réalisation possibles de l'invention, le dispositif est conçu pour être éclairé seulement par la lumière ambiante (naturelle et/ou artificielle) ; dans d'autres modes de réalisation, il est équipé d'au moins une source d'éclairage artificiel disposée à proximité de l'une des tranches (ou chants) de l'empilage, les rayons lumineux pénétrant alors dans l'ensemble des lames par leur tranche.

Dans un mode de réalisation préférentiel, lorsque le dispositif sert à la visualisation d'un dessin, les lames sont en réalité des lamelles en forme de bâtonnet de section rectangulaire (ou carrée), et ces bâtonnets sont fixés les uns aux autres, côte à côte, de manière à constituer un panneau ; ce panneau peut être plan ou suivre une surface réglée courbe.

Dans ce cas, les différentes parties de lames sont des tronçons de bâtonnets qui sont placés bout-à-bout.

Il est possible, dans une variante, de donner à certains de ces tronçons une largeur différente de celle des autres tronçons, ce qui permet de donner à l'assemblage un aspect de relief susceptible de rehausser encore la mise en valeur du dessin.

Un tel mode de réalisation s'applique notamment à la fabrication d'enseignes et autres panneaux publicitaires ou signalisateurs, ainsi qu'à la fabrication de constructions artistiques et utilitaires diverses, par exemple des luminaires ou des éléments de mobilier.

Dans un autre mode de réalisation possible de l'invention, qui sert à la visualisation d'une forme, les lames en plusieurs parties comprennent une partie principale pourvue d'au moins une fenêtre dans laquelle est enchâssée une partie secondaire. La forme est construite par la juxtaposition de ces parties secondaires qui résulte de l'empilage des lames. Cette forme apparaît à l'observateur comme une incrustation lumineuse située au coeur de l'objet, à caractère changeant, extrêmement attractive.

Ce mode de réalisation peut s'appliquer à la fabrication d'objets divers "en volume" soit purement artistiques, par exemple des sculptures, soit à la fois utilitaires et esthétiques, par exemple des éléments de mobilier.

D'autres caractéristiques et avantages de l'invention apparaîtront de la description et des dessins annexés qui en présentent des modes de réalisation préférentiels.

Sur ces dessins :

- la figure 1 est une vue de face, partiellement coupée, d'une enseigne équipée d'un premier mode de réalisation du dispositif selon l'invention ;

- la figure 2 est une vue de droite du dispositif de la figure 1 ;

- la figure 3 est une vue montrant en perspective trois barrettes de verre constitutives du dispositif des figures 1 et 2 ; la figure 3 en est une variante ;

- les figures 4, 5 et 6 sont des vues de faces de trois variantes possibles du dispositif des figures 1 et 2 ;

- la figure 7 est une vue de côté du dispositif de la figure 6 ;

- la figure 8 est une vue en perspective d'un banc public qui constitue un second mode de réalisation possible du dispositif selon l'invention ;

- la figure 9 est une vue schématique en perspective d'une table basse qui constitue un troisième mode de réalisation possible du dispositif selon l'invention ;

- la figure 10 est une vue en élévation, à échelle légèrement agrandie, du dispositif de la figure 9 ;

- la figure 11 est une vue de côté de la figure 10, coupée par le plan vertical XI-XI ;

- la figure 12 est une vue de dessus de la figure 11, coupée par le plan horizontal XII-XII ;

- la figure 13 représente en perspective deux lames constitutives du dispositif des figures 9 à 12.

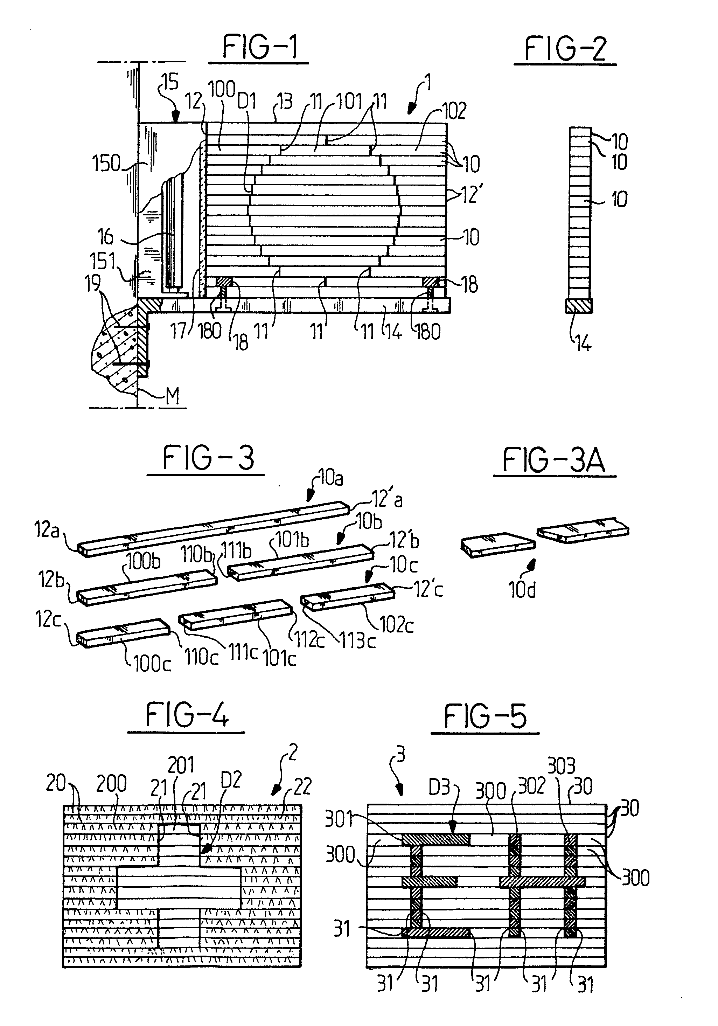

L'enseigne représentée sur les figures 1 et 2 comprend un dispositif 1 de visualisation d'un dessin D1, qui est par exemple une circonférence.

Le dispositif 1 a la forme d'un panneau rectangulaire, de faible épaisseur, qui est constitué par la juxtaposition d'une série de lames horizontales 10 en verre ou en matériau similaire, par exemple en matière plastique ; les lames 10 sont en matériau transparent ou translucide, incolore ou coloré.

Ces lames ont la forme de bâtonnets de section rectangulaire, qui sont fixées les unes aux autres par collage ; la colle utilisée est naturellement choisie en fonction de la nature du matériau constituant les lames 10.

Comme on le voit sur les figures 1 et 3, certains bâtonnets 10 sont constitués de plusieurs tronçons.

A la figure 3, on a représenté un bâtonnet entier 10a, dont les faces d'extrémité ou tranches, ont été désignées par les références 12a, 12'a. On a représenté un bâtonnet 10b qui a été sectionné en son centre de manière à présenter deux tronçons séparés 100b, 101b ; les tranches extérieures de ces deux tronçons ont été désignées par les références 12b, 12'b, tandis que les tranches intérieures, par lesquelles ils sont accolés, ont été désignées par les références 110b, respectivement 111b. On a représenté un bâtonnet 10c qui a été sectionné en trois tronçons : un tronçon central 101c et deux tronçons d'extrémité 100c, 102c ; les tranches d'extrémité de ce bâtonnet ont été désignées par les références 12c, 12'c, tandis que les tranches en contact des tronçons 100c et 101c ont été désignées respectivement par les références 110c, 111c et que les tranches en contact des tronçons 101c et 102c ont été désignées respectivement par les références 112c et 113c.

Les trois bâtonnets représentés à la figure 3 correspondent aux trois bâtonnets 10 supérieurs de l'empilage constituant le dispositif 1.

Les bâtonnets sont sectionnés de telle manière que les tranches en contact forment des faces ou facettes généralement désignées par 11, positionnées après assemblage du dispositif de manière à décrire le dessin souhaité, en l'occurrence une circonférence.

A la figure 3A, on a représenté une variante selon laquelle les bâtonnets 10d sont sectionnés non plus perpendiculairement à leurs faces apparentes, mais obliquement par rapport à ces faces.

Le dispositif 1 est fixé par sa partie inférieure sur un support 14 en forme d'équerre, dont une branche est fixée à un mur M au moyen d'organes de fixation 19 tels que des vis par exemple. A proximité de l'ensemble des tranches 12 du panneau 1 est monté un dispositif d'éclairage artificiel 15 ; celui-ci comprend un tube luminescent 16, par exemple un tube néon, disposé verticalement à proximité d'une vitre 17 qui est positionnée contre les chants 12 du panneau ; le tube 16 est porté par un boîtier de support et de commande 151, et est caché par un capot protecteur 150 (partiellement coupé sur la figure 1).

Le panneau 1 est fixé au support 14 à sa partie inférieure au moyen d'organes de fixation 180 qui coopèrent avec des inserts métalliques 18 qui sont intercalés dans l'un des bâtonnets inférieurs 10.

Lorsque le tube 16 est allumé, les rayons lumineux pénètrent dans le dispositif à travers la vitre 17, à l'intérieur des différents bâtonnets superposés 10 ; lorsque ces bâtonnets sont formés d'un seul morceau, comme c'est le cas des deux bâtonnets supérieur et inférieur du panneau, la lumière les traverse de part en part. Au contraire, lorsque ces bâtonnets sont constitués de plusieurs parties séparées par des faces transversales (perpendiculaires au panneau), une partie de la lumière est "accrochée" par ces faces d'interruption 11, et est réfléchie vers l'extérieur du panneau ; c'est cette réflexion qui réalise la visualisation souhaitée du dessin. Lorsque l'enseigne est exposée à la lumière ambiante, par exemple à la lumière du soleil, même en l'absence du dispositif d'éclairage 15 (ou si celui-ci est éteint), la lumière pénètre dans le panneau 1 à la fois par les tranches 12' et par la face supérieure 13 du panneau, et cette lumière est également "accrochée" par les faces 11 de sorte que le dessin D1 est à nouveau visualisé ; bien entendu, si l'on a à la fois un éclairage artificiel par le tube 16 et un éclairage naturel par la lumière ambiante, on obtient une visualisation plus complète de D1.

Par ailleurs, dans une variante, il serait possible de prévoir une seconde source d'éclairage artificiel, située de l'autre côté du panneau 1, c'est-à-dire en vis-à-vis des tranches 12'.

De la description qui précède, il ressort clairement que l'illumination des faces 11 composant le contour D1 va dépendre de la position des sources éclairantes ; ainsi, l'enseigne étant montée à l'extérieur, la visualisation du dessin D1 va changer au cours de la journée, en raison du déplacement du soleil.

La variante de la figure 4 représente un panneau d'enseigne 2 composé d'un empilage de bâtonnets 20 similaire à celui du panneau 1 ; les faces de liaison des bâtonnets en plusieurs parties sont cette fois déterminées et positionnées de manière à définir un dessin D2 représentant une croix, l'enseigne étant destinée à équiper une pharmacie.

Dans cette variante, les faces latérales des bâtonnets ou tronçons de bâtonnets 20 situés à l'extérieur de la croix présentent une texture superficielle différente des tronçons formant la partie intérieure de cette croix ; en effet, alors que les tronçons intérieurs 201 sont parfaitement polis, les tronçons extérieurs 200 présentent un bord irrégulier ; cette irrégularité peut être réalisée tout simplement au moyen d'un outil de coupe (roulette) présentant des irrégularités.

Il va de soi qu'il serait possible de prévoir au contraire des tronçons de bâtonnets intérieurs au dessin présentant une texture latérale superficielle irrégulière, et des tronçons extérieurs au dessin présentant une surface latérale lisse.

La variante de la figure 5 représente un panneau plat 3, également composé de bâtonnets empilés 30, dont certains sont composés de plusieurs tronçons 300, 301, 302, 303 ; ces tronçons sont déterminés et positionnés de manière à former un dessin D3 figurant par exemple des lettres, en l'occurence les lettres "E H". Pour rehausser encore l'effet de visualisation de ces lettres, due à la présence des faces de liaison 31 perpendiculaires au panneau, les tronçons constitutifs des lettres formant le dessin D3, sont réalisés en matériau coloré ; dans le cas du verre cette coloration peut être obtenue de manière connue par adjonction dans le verre, au moment de sa fabrication, d'oxydes métalliques appropriés.

Il est évident qu'on peut envisager de prévoir sur un même panneau différentes colorations ; en outre, ces colorations peuvent s'appliquer également aux bâtonnets et aux tronçons de bâtonnets situés à l'extérieur du contour du dessin D3.

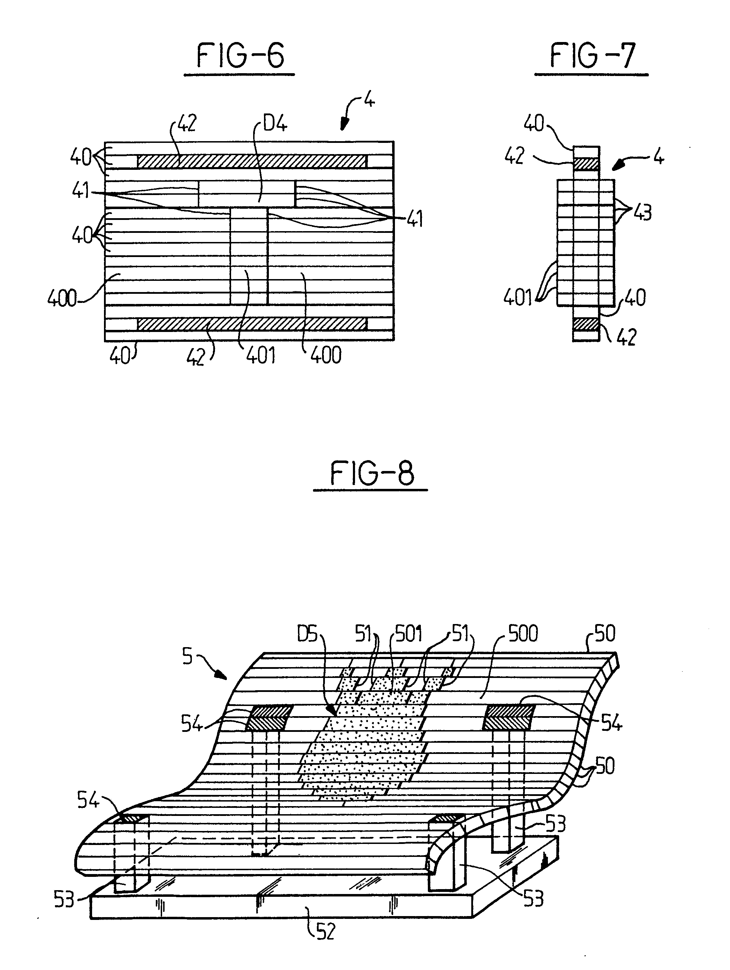

Le panneau 4 qui fait l'objet de la variante représentée à la figure 6 est un panneau similaire à ceux qui viennent d'être décrits, composé d'un empilage de bâtonnets 40 ; certains de ces bâtonnets sont composés de plusieurs tronçons 400, 401, 400, les tronçons intérieurs 401 formant un dessin D4 qui figure la lettre "T" ; les faces séparatrices entre ces tronçons sont désignées par la référence 41. Dans cette variante, le dessin D4 est placé entre deux barres horizontales opaques, éventuellement colorées 42 ; ces barres ont une forme identique à celle des bâtonnets et sont fixées au reste du panneau également par collage ; ce sont par exemple des barres en matière plastique ou en métal. Par ailleurs, comme on le voit à la figure 7, les tronçons 401 qui forment la lettre "T" possèdent une largeur sensiblement supérieure à celle du reste du panneau. Grâce à cet arrangement, on obtient un effet de relief, qui rehausse encore la visualisation du dessin D4.

Il va de soi que la largeur des barres opaques 42 pourraient également être différente de celle du reste du panneau 4, par exemple identique à celle des tronçons 401.

Au lieu de faire saillie par rapport au reste du panneau, les tronçons formant le dessin D4 pourraient être en retrait par rapport à ce panneau, leur épaisseur étant dans ce cas inférieure à celle du reste du panneau.

L'ensemble des panneaux 1 à 4 qui vient d'être décrit est composé d'un empilage de bâtonnets qui d'une part possèdent tous la même épaisseur, et d'autre part sont disposés horizontalement ; il va de soi qu'on ne sortirait pas du cadre de la présente invention en prévoyant des bâtonnets d'épaisseurs différentes pour un même panneau et en les disposant verticalement ou même obliquement. En outre, ces bâtonnets ne sont pas nécessairement des lamelles rectangulaires ; ils pourraient par exemple présenter un bord latéral courbe.

Bien entendu, le choix de l'épaisseur des barrettes sera fixé en fonction de la finesse du dessin que l'on souhaite reproduire, et des dimensions générales du panneau.

Le deuxième mode de réalisation représenté à la figure 8 est un banc public 5, dont la paroi d'appui est formée d'un empilage de lamelles en verre (ou matériau similaire) 50 ; ces lamelles sont des bâtonnets analogues à ceux qui constituent les panneaux plans 1 à 4 ; les différents bâtonnets sont assemblés de manière à décrire une surface réglée courbe, dont la forme correspond à celle d'un banc public. Conformément à l'invention, certains de ces bâtonnets 50 présentent plusieurs tronçons 500, 501, et les faces de liaison 51 entre ces différents tronçons sont positionnées de manière à dessiner un dessin D5 . Ce dessin est par exemple une fleur. Certains bâtonnets comprennent des tronçons métalliques 54, qui assurent la fixation du panneau courbe ainsi obtenu à un socle 52, par l'intermédiaire de pieds de support 53, et éventuellement d'une armature de soutien appropriée.

Dans le mode de réalisation représenté, l'état de surface des tronçons de bâtonnets 501 intérieurs au dessin D5 est différent de celui des autres tronçons ou bâtonnets ; cette surface a été dépolie, par exemple par micro-sablage, de sorte que la mise en valeur du dessin D5 est rehaussée.

Ce banc peut être placé par exemple dans un jardin public, la lumière du soleil mettant en évidence le dessin D5, et ceci de manière changeante en cours de journée.

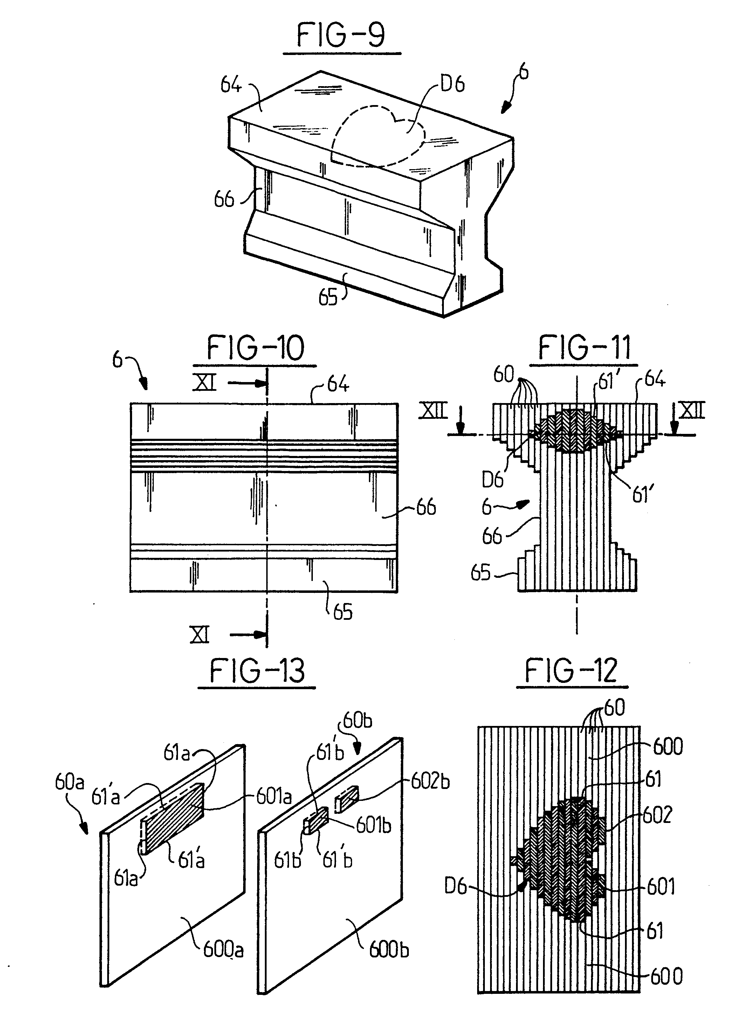

Le dispositif faisant l'objet du troisième mode de réalisation représenté sur les figures 9 à 12 est une table basse, par exemple une table de salon, comprenant un plateau horizontal 64, un pied central 66 et un socle 65.

Ce dispositif 6 est constitué d'un empilage de lames 60 disposées verticalement et collées les unes aux autres. Ces lames ont une forme rectangulaire, les deux dimensions du rectangle ayant des dimensions relativement grandes par rapport à l'épaisseur des lames. Elles sont découpées de manière à ce que leur empilage réalise la forme de table souhaitée.

Conformément à l'invention, cette table visualise une forme D6, par exemple un coeur, qui est incrustée au centre de la table.

Ce résultat est obtenu, grâce au fait que certaines des lames 60 sont constituées de plusieurs parties : une partie principale qui constitue la table proprement dite, et une ou plusieurs parties secondaires qui constituent le corps de la forme 10. Cette structure particulière de certaines lames est illustrée à la figure 13 ; sur cette figure, on a représenté deux lames constitutives de la table 6 : une lame 60a qui se trouve dans la partie centrale de la table, et une lame 60b qui correspond au bord de la forme D6 situé sur la droite des figures 11 et 12. La lame 60a est constituée de deux parties : une partie principale 600a et une partie secondaire 601a, également rectangulaire, qui est enchâssée dansune fenêtre rectangulaire découpée dans la région supérieure de la partie principale ; on a désigné par les références 61a les faces de contact verticales entre les deux parties 601a et 600a et par les références 61'a leurs faces de contact horizontales. On comprend aisément que grâce à cet arrangement, la lumière qui traverse la lame 60a va être réfléchie à la fois sur les faces verticales 61a et sur les faces horizontales 61'a, ce qui réalise une visualisation spatiale de la partie secondaire enchâssée 601a.

La lame 60b, qui correspond à une tranche de la partie supérieure du coeur, comprend une partie principale 600b et deux parties secondaires 601b, 602b, enchâssées dans la région supérieure de la partie principale. On a désigné par les références 61b et 61'b les faces de contact respectivement verticaleset horizontalesdes parties secondaires avec la partie principale.

La forme D6 détermine naturellement l'emplacement et le positionnement des parties secondaires encastrées dans les parties centrales pour l'ensemble des lames composant la table 6. Ces parties secondaires sont de préférence colorées, de manière à rehausser la mise en valeur de la forme D6, l'effet de coloration s'ajoutant à l'effet de réflexion des faces 61 et 61', pour bien mettre en évidence la forme incrustée D6.

Il va de soi que dans un même objet il serait possible de visualiser plusieurs formes.

Par ailleurs, les lames 60 ne sont pas nécessairement rectangulaires ; la forme de ces lames sera choisie en fonction de la forme de l'objet que l'on souhaite obtenir par empilage desdites lames ; de même, le contour des parties secondaires enchâs-sées n'est pas nécessairement rectangulaire, ce contour pouvant être quelconque, par exemple polygonal, circulaire ou ovale, le contour choisi dépendant de la forme que l'on souhaite visualiser.

Il est possible par ailleurs d'associer, comme il l'a été fait pour le dispositif 1 de représentation d'un dessin D1, une source lumineuse artificielle à un dispositif "en volume" de visualisation d'une forme, tel que la table 6 ; une telle association peut être envisagée notamment pour la fabrication de luminaires, ou de sculptures artistiques éclairées artificiellement.

L'invention n'est pas limitée aux seuls modes de réalisation qui viennent d'être décrits ; elle en englobe au contraire toutes les variantes.

C'est ainsi qu'on ne sortirait pas du cadre de l'invention en proposant des dispositifs composés d'un assemblage des lames qui ne sont pas toutes juxtaposées dans le même sens ; on peut en effet concevoir un dispositif du type revendiqué dans lequel une première série de lames serait disposée verticalement et une seconde série serait disposée horizontalement ou obliquement ; il n'est pas obligatoire d'utiliser pour le collage des diverses lames entre elles une colle transparente ; on pourrait au contraire utiliser des colles translucides ou de couleur, éventuellement en couches épaisses, susceptibles de contribuer à l'esthétique de l'assemblage.

Les lames pourraient être assemblées par des procédés autres que le collage, notamment à l'aide d'organes de bridage les traversant.

Certaines faces apparentes des lames ou des tronçons de lames pourraient recevoir un vernis ou une peinture.

Enfin, dans le cas d'une sculpture, ou d'une construction artistique similaire, un dispositif conforme à l'invention pourrait constituer le sous-ensemble d'une construction plus vaste, ce dispositif étant par exemple associé à des éléments en béton coulé.

En plus des applications déjà citées, diverses applications peuvent être envisagées pour ce dispositif, par exemple comme partie de construction en remplacement de pavés de verre ou de vitraux, ou comme objets très spécifiques.

## Revendications

1. Dispositif de visualisation d'un dessin ou d'une forme, qui comprend un empilage de lames en verre ou en matériau similaire transparent ou translucide, qui est destiné à être exposé à une source lumineuse, caractérisé par le fait que certaines de ces lames (10, 20, 30, 40, 50, 60) sont constituées de plusieurs parties accolées dont les faces de contact (11, 21, 31, 41, 51, 61-61') sont positionnées de manière à décrire le contour du dessin (D1, D2, D3, D4, D5) ou de la forme (D6) à visualiser, ces faces de contact constituant des plans de réflexion pour les rayons lumineux traversant lesdits lames.

2. Dispositif selon la revendication 1, caractérisé par le fait que les lames (10, 20, 30, 40, 50, 60) sont fixées les unes aux autres par collage.

3. Dispositif selon l'une des revendications 1 ou 2, caractérisé par le fait que certaines (301, 302, 303 ; 601, 602) des parties constituant une lame (30 ; 60) possèdent une coloration différente de celle des autres parties (300 ; 600).

4. Dispositif selon l'une des revendications 1 à 3, caractérisé par le fait que certaines (201 ; 501) des parties constituant une lame (20 ; 50) présentent un état de surface différent de celui des autres parties (200 ; 500).

5. Dispositif selon l'une des revendications 1 à 4, caractérisé par le fait que certaines parties de lame (18 ; 42 ; 54) sont en matériau opaque, par exemple en métal.

6. Dispositif selon la revendication 5, caractérisé par le fait que les parties en matériau opaque (18 ; 54) servent à la fixation du dispositif sur un support (14 ; 52).

7. Dispositif selon l'une des revendications 1 à 6, caractérisé par le fait qu'il est équipé d'au moins une source d'éclairage artificiel (15) disposée à proximité de l'une des tranches (12) de l'empilage.

8. Dispositif de visualisation d'un dessin (D1, D2, D3, D4) selon l'une des revendications 1 à 7, caractérisé par le fait que lesdites lames (10, 20, 30, 40) ont la forme de bâtonnets de section rectangulaire fixés les uns aux autres de manière à constituer un panneau sensiblement plan (1, 2, 3, 4).

9. Dispositif de visualisation d'un dessin (D5) selon l'une des revendications 1 à 7, caractérisé par le fait que lesdites lames (50) ont la forme de bâtonnets de section rectangulaire fixés les uns aux autres de manière à décrire une surface courbe.

10. Dispositif de visualisation d'un dessin (D4) selon l'une des revendications 8 ou 9, caractérisé par le fait que certaines parties (401) des lames en forme de bâtonnets (40) possèdent une largeur différente de celle des autres parties (400).

11. Dispositif de visualisation d'une forme (D6) selon l'une des revendications 1 à 7, caractérisé par le fait que les lames (60) en plusieurs parties comprennent une partie principale (600) pourvue d'au moins une fenêtre dans laquelle est enchâssée une partie secondaire (601, 602).

12. Enseigne comportant un dispositif conforme à l'une des revendications 8 à 10.

13. Elément de mobilier et/ou sculpture comportant un dispositif conforme à l'une des revendications 9 à 11.

0242312

## FIG-1

## FIG-2

## FIG-3

## FIG-3A

## FIG-4

## FIG-5

0242312

## FIG-6

## FIG-7

## FIG-8

0242312

## FIG-9

## FIG-10

## FIG-11

## FIG-13

## FIG-12

Office européen
des brevets

**RAPPORT DE RECHERCHE EUROPEENNE**

Numéro de la demande

EP 87 46 0005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 444 424 (C. SCHINKAR)<br><br>* Revendications 1-4; page 2, lignes 33-39; page 3, lignes 4-8; figures 1-4 * | 1,9,10,13 | G 09 F 13/18<br>B 44 C 3/10 |
| A | FR-A-1 246 347 (P.-E. LANGLOIS)<br>* Résumé, points 1,2d; page 2, colonne de droite, alinéa 5 - page 3, colonne de gauche, avant-dernier alinéa; figures 6-8 * | 1,2,7 | |
| A | DE-A-2 357 621 (CZAPLA)<br><br>* Revendications 1,6-8,10; page 1, en entier; figures * | 1,3,4,7 | |
| A | US-A-2 560 117 (R.W. MALLARY)<br><br>* Revendication 1; colonne 4, lignes 11-61; figures 1-3 * | 1,3,4,7 | DOMAINES TECHNIQUES RECHERCHES (Int. Cl.4)<br><br>G 09 F<br>B 44 C<br>B 44 F<br>F 21 S |

Le présent rapport de recherche a été établi pour toutes les revendications

| Lieu de la recherche | Date d'achèvement de la recherche | Examinateur |
|---|---|---|
| LA HAYE | 21-07-1987 | FRANSEN L.J.L. |